(19) Europäisches Patentamt
European Patent Office
Office européen des brevets

(11) **EP 3 243 772 B1**

(12) **EUROPÄISCHE PATENTSCHRIFT**

(45) Veröffentlichungstag und Bekanntmachung des Hinweises auf die Patenterteilung:
**18.09.2019 Patentblatt 2019/38**

(51) Int Cl.:
**B65G 54/02** (2006.01)    **B60L 13/03** (2006.01)
**H02K 41/02** (2006.01)

(21) Anmeldenummer: **17170074.3**

(22) Anmeldetag: **09.05.2017**

(54) **BAUKASTENSYSTEM AUS EINER VIELZAHL VON TRANSPORTSTRECKENBAUGRUPPEN EINES LANGSTATORLINEARMOTORS**

MODULAR SYSTEM MADE FROM A PLURALITY OF A TRANSPORT ROUTE ASSEMBLIES FOR A LINEAR MOTOR WITH GUIDEWAY STATOR

SYSTÈME MODULAIRE À PARTIR D'UNE PLURALITÉ DE MODULES D'ITINÉRAIRE DE TRANSPORT D'UN MOTEUR LINÉAIRE À STATOR LONG

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.05.2016 AT 504282016**

(43) Veröffentlichungstag der Anmeldung:
**15.11.2017 Patentblatt 2017/46**

(73) Patentinhaber: **B&R Industrial Automation GmbH**
**5142 Eggelsberg (AT)**

(72) Erfinder:
• **Walter, Dominic**
  **5020 Salzburg (AT)**
• **Obermair, Christoph**
  **5020 Salzburg (AT)**
• **Huber, Stefan**
  **5020 Salzburg (AT)**

(74) Vertreter: **Patentanwälte Pinter & Weiss OG**
**Prinz-Eugen-Straße 70**
**1040 Wien (AT)**

(56) Entgegenhaltungen:
WO-A1-01/38124          WO-A1-2015/042409
DE-A1-102010 027 925    DE-U1- 20 120 576
US-A1- 2003 230 941     US-A1- 2010 236 445
US-A1- 2011 125 307

## Beschreibung

Die gegenständliche Erfindung betrifft ein Baukastensystem für das Konfigurieren einer Transportstrecke eines Langstatorlinearmotors bestehend aus einer Vielzahl von Transportstreckenbaugruppen, wobei jede Transportstreckenbaugruppe einen Anfangspunkt und einen Endpunkt aufweist, der jeweils auf einem Rastereckpunkt (p·a) x (q·a) eines (a x a)-Rasters mit vorgegebener Rasterlänge a liegt, wobei p, q ganze Zahlen sind. Weiters betrifft die Erfindung einen Langstatorlinearmotor mit einer Transportstrecke und eine Transportstrecke eines Langstatorlinearmotors, wobei die Transportstrecke jeweils aus einer Vielzahl von Transportstreckenbaugruppen aus dem Baukastensystem zusammengesetzt ist.

Langstatorlinearmotoren werden oftmals als flexible Fördereinrichtungen in Herstellungs-, Bearbeitungs-, Montageanlagen, und ähnlichen Anlagen, verwendet. Ein Langstatorlinearmotor besteht bekanntermaßen im Wesentlichen aus einem Langstator in Form einer Vielzahl hintereinander angeordneter Antriebsspulen, die an einer ortsfesten Konstruktion angeordnet sind, und einer Vielzahl von Transporteinheiten mit Erregungsmagneten (Permanent- oder Elektromagnete), die entlang des Langstators bewegt werden. Dazu werden die Antriebsspulen mit einem elektrischen Strom beaufschlagt. Durch ein geeignetes Bestromen der Antriebsspulen wird ein bewegtes Magnetfeld erzeugt, das mit den Erregungsmagneten an den Transporteinheiten zusammenwirkt, um die Transporteinheiten gemäß dem bekannten Motorprinzip zu bewegen. Durch den Langstator wird somit eine Transportstrecke ausgebildet, entlang der die Transporteinheiten bewegt werden können. Damit ist es möglich jede Transporteinheit einzeln und unabhängig voneinander zu bewegen (Position, Geschwindigkeit, Beschleunigung, Bewegungsrichtung). Dazu wird jede Antriebsspule durch einen zugeordneten Antriebsspulenregler angesteuert, der Vorgaben zur Bewegung einer Transporteinheit (z.B. in Form von Sollwerten für Position oder Geschwindigkeit) von einer übergeordneten Anlagensteuereinheit erhalten kann und der Stellgrößen für die Antriebsspulen, insbesondere Spulenströme, berechnet. Dabei können entlang der Transportstrecke auch Weichen des Langstatorlinearmotors vorgesehen sein, an denen eine Aufteilung auf verschiedene Transportstrecken oder eine Zusammenführung von verschiedenen Transportstrecken erfolgt. Eine Fördereinrichtung in Form eines Langstatorlinearmotors kann daher durchaus komplexe Bahnführungen aufweisen.

Oftmals ist der Langstator bzw. eine Transportstrecke auch in Form von einzelnen, zusammengefügten Transportstreckenbaugruppen aufgebaut. Durch diese Modularität kann ein Langstatorlinearmotor einfacher aufgebaut werden, insbesondere wenn definierte Transportstreckenbaugruppen verwendet werden. Die konstruktive Ausgestaltung des Langstatorlinearmotors, also z.B. die Ausführung der Antriebsspulen, der Förderstrecke, der Transporteinheiten, der Führungen der Transporteinheit, usw., kann natürlich verschieden sein, wobei das grundlegende Funktionsprinzip eines Langstatorlinearmotors aber gleich bleibt. Die Wahl der Transportstreckenbaugruppen ist dabei aber keinesfalls trivial. Grundsätzlich will man mit möglichst wenigen Transportstreckenbaugruppen flexibel verschiedenste Transportstrecken realisieren können.

Die Dokumente WO 2015/042409 A1, US 2011/0125307 A1, US 2003/0230941 A1, WO 01/38124 A1, DE 10 2010 027925 A1 und US 2010/0236445 A1 offenbaren beispielsweise Transportsysteme in unterschiedlichen Ausgestaltungen für verschiedene Anwendungsbereiche bei denen Langstatorlinearmotoren zum Einsatz kommen. Dabei werden einzelne Module in diversen Größen und Formen zu Transportsystemen verbunden. Nachteilig ist jedoch, dass zur Realisierung komplexer geschlossener Transportsysteme viele verschiedene Module in verschiedenen Größen notwendig sind und dass keine ruckfreie Bewegung der Transporteinheiten am Übergang von geraden auf gekrümmte Transportsegmente gewährleistet werden kann.

Es ist daher eine Aufgabe der gegenständlichen Erfindung Transportstreckenbaugruppen anzugeben mit denen mit wenigen verschiedenen Typen auf flexible Weise verschiedenste, insbesondere geschlossene, Transportstrecken realisiert werden können, die eine möglichst ruckfreie Bewegung einer Transporteinheit ermöglichen.

Diese Aufgabe wird mit einem Baukastensystem gelöst, wobei im Baukastensystem zumindest eine Transportstreckenbaugruppe vorgesehen ist, die aus zwei Kurveneingangsmodulen, auf denen der Anfangspunkt oder der Endpunkt vorgesehen ist, und zumindest einem Verbindungsmodul, das die beiden Kurveneingangsmodule verbindet, zusammengesetzt ist, wobei der Krümmungsradius jeweils eines Endes der Kurveneingangsmodule unendlich ist und das jeweils andere Ende des Kurveneingangsmoduls einen vorgegebenen Krümmungsradius größer Null aufweist und das Verbindungsmodul an beiden Enden denselben vorgegebenen Krümmungsradius aufweist. Damit lassen sich mit einer definierten Transportstreckenbaugruppen verschiedenste Transportstrecken realisieren. Durch die Anordnung in einem Raster kann auch auf einfache Weise sichergestellt werden, dass in sich geschlossene Transportstrecken realisierbar sind. Ein besonderer Vorteil des Rasters ist es auch, dass eine Transportstrecke trotz Verwendung unterschiedlichster Transportstreckenbaugruppen aus dem Baukasten, auch in Verwendung mit unterschiedlichen Orientierungen, geschlossen werden kann, womit sich sehr einfach geschlossen Bahnen realisieren lassen. Durch verschiedene Gestaltung des Kurveneingangsmoduls und/oder des Verbindungsmoduls verschiedene Transportstreckenbaugruppen realisiert werden, die trotzdem das vorgegebene Rastermaß einhalten. Insbesondere kann einfach ein Kurveneingangsmodul mit verschiedenen Verbindungsmodulen kombiniert werden. Dadurch, dass der Krümmungsradius jeweils eines Endes der Kurveneingangsmodule unendlich ist und das jeweils andere Ende des Kurveneingangsmoduls einen vorgegebenen Krümmungsradius größer Null aufweist und das Verbindungsmodul an beiden Enden denselben vorgegebenen Krümmungsradius aufweist, können Krümmungssprünge zwischen zwei benachbarten Transportstreckenbaugruppen oder zwischen einem Kurveneingangsmodul und einem Verbindungsmodul vermieden werden.

Bevorzugte einfache Grundelemente des Baukastensystems zur Auswahl sind eine gerade Transportstreckenbaugruppe mit Anfangspunkt im Rastereckpunkt p, q=0 als Ursprung und Endpunkt im Rastereckpunkt p ≠ 0, q=0, oder umgekehrt, eine 90° Transportstreckenbaugruppe mit Anfangspunkt im Rastereckpunkt p, q=0 als Ursprung und Endpunkt im Rastereckpunkt p, q ≠ 0, oder umgekehrt, und vorzugsweise p=q, eine 180° Transportstreckenbaugruppe mit Anfangspunkt im Rastereckpunkt p, q=0 als Ursprung und Endpunkt im Rastereckpunkt $p \in \mathbb{Z}$, q ≠ 0, oder umgekehrt, und/oder eine S-förmige Transportstreckenbaugruppe mit Anfangspunkt im Rastereckpunkt p, q=0 als Ursprung und Endpunkt im Rastereckpunkt p, q ≠ 0, oder umgekehrt. Mit diesen einfachen Grundformen kann nahezu jede Transportstrecke realisiert werden.

Die Flexibilität in der Gestaltung der Transportstreckenbaugruppen kann weiters erhöht werden, wenn das Verbindungsmodul aus einer Mehrzahl von Kreissegmentmodulen zusammengesetzt ist, wobei jedes Kreissegmentmodul an beiden Enden denselben Krümmungsradius aufweist. Auf diese Weise lassen sich auch wieder nachteilige Krümmungssprünge an den Übergängen zwischen den einzelnen Kreissegmentmodulen vermeiden.

Eine S-förmige Transportstreckenbaugruppe ohne nachteilige Krümmungssprünge kann einfach realisiert werden mit einem Verbindungsmodul, das an beiden Enden denselben vorgegebenen Krümmungsradius mit Krümmungen in unterschiedlichen Richtungen aufweist.

Alternativ kann eine S-Kurven Transportstreckenbaugruppe aus zwei miteinander verbundenen Kurveneingangsmodulen zusammengesetzt sein. Um Krümmungssprünge zu vermeiden, kann dabei vorgesehen sein, dass der Krümmungsradius jeweils eines Endes der Kurveneingangsmodule unendlich ist und das jeweils andere Ende der Kurveneingangsmodule einen gleichen vorgegebenen Krümmungsradius größer Null mit Krümmungen in unterschiedlichen Richtungen aufweist

Die gegenständliche Erfindung wird nachfolgend unter Bezugnahme auf die Figuren 1 bis 7 näher erläutert, die beispielhaft, schematisch und nicht einschränkend vorteilhafte Ausgestaltungen der Erfindung zeigen. Dabei zeigt

Fig.1 und 2 Ausführungsbeispiele eines Langstatorlinearmotors mit Transportstrecken,
Fig.3 eine 90°-Bogen Transportstreckenbaugruppe des Baukastensystems,
Fig.4 eine 180°-Bogen Transportstreckenbaugruppe des Baukastensystems,
Fig.5 und 6 S-Kurven Transportstreckenbaugruppen des Baukastensystems und
Fig.7 ein Beispiel eines Baukastensystems mit verschiedenen Transportstreckenbaugruppen.

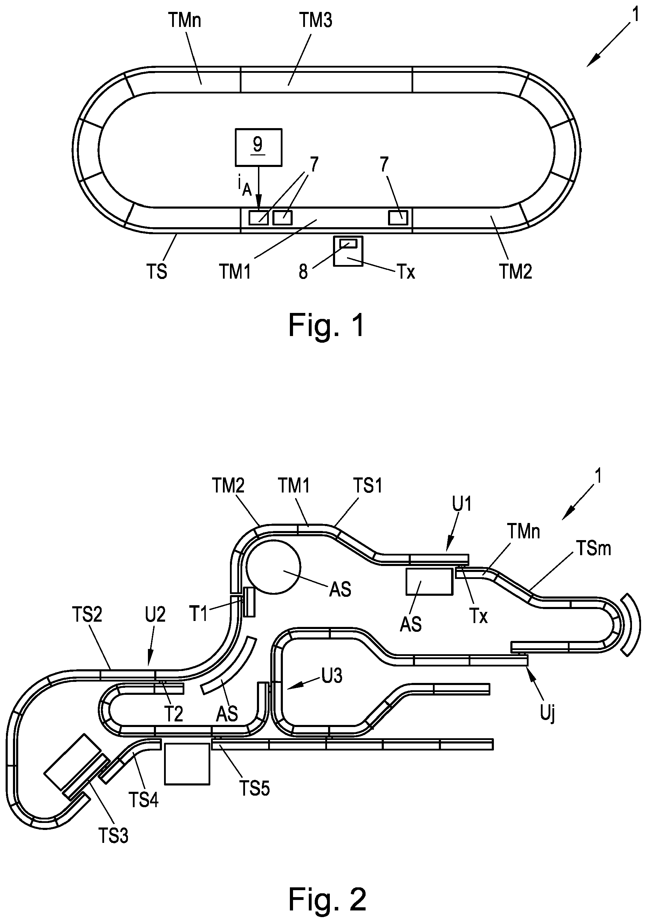

Ein einfaches Beispiel eines Langstatorlinearmotors 1 ist in Fig.1 dargestellt. Der Langstatorlinearmotor 1 ist dabei als geschlossene Transportstrecke TSm ausgeführt. Die Transportstrecke TSm wird gebildet aus einer Anzahl n>1 von Transportstreckenbaugruppen TM1, ..., TMn, die aneinandergereiht werden. Auf einer Transportstreckenbaugruppe TMn sind eine Vielzahl von Antriebsspulen 7 angeordnet, die unter Kontrolle einer Regelungseinheit 9 (nur für eine Antriebsspule 7 dargestellt) mit einem Spulenstrom $i_A$ (als Vektor in Betrag und Richtung) bestromt werden, um ein bewegtes Magnetfeld zu erzeugen. Entlang der Transportstrecke TS wird zumindest eine Transporteinheit Tx bewegt. Die Transporteinheit Tx ist dazu auf geeignete Weise an der stationär angeordneten Transportstrecke TS geführt. Außerdem ist an der Transporteinheit Tx zumindest ein Erregungsmagnet 8, vorzugsweise ein Permanentmagnet, angeordnet, der mit dem erzeugten, bewegten Magnetfeld zur Bewegung der Transporteinheit Tx entlang der Transportstrecke TS zusammenwirkt. Selbstverständlich können entlang der Transportstrecke TS auch mehr als eine Transporteinheit Tx bewegt werden, wobei jede Transporteinheit Tx durch entsprechendes Bestromen der Antriebsspulen 7 im Bereich der Transporteinheit Tx unabhängig von den anderen Transporteinheiten Tx bewegt (in Richtung, Position, Geschwindigkeit und Beschleunigung) werden kann. Dieses Funktionsprinzip eines Langstatorlinearmotors 1 ist hinlänglich bekannt, sodass hier nicht weiter darauf eingegangen wird.

Es kann natürlich auch an beiden Seiten einer Transporteinheit Tx (in Bewegungsrichtung gesehen) eine Transportstreckenbaugruppe TMn mit Antriebsspulen 7 vorgesehen sein. In diesem Fall hat auch die Transporteinheit Tx vorzugsweise an beiden Seiten zumindest einen Erregungsmagnet 8.

In Fig.2 ist ein komplexer aufgebauter Langstatorlinearmotor 1 dargestellt, wobei aus Gründen der Übersichtlichkeit auf die Darstellung der Antriebsspulen 7 und der Erregungsmagnete 8 verzichtet wird. Hierbei sind mehrere, nicht geschlossene Transportstrecken TSm, m>1 (aus Übersichtsgründen wurden nicht alle Transportstrecken TSm bezeichnet) vorgesehen, die gemeinsam eine Bahn des Langstatorlinearmotors 1 ausbilden. Die Transportstrecken TSm sind dabei wiederum aus verschiedenen Transportstreckenbaugruppen TMn gebildet. Eine Transporteinheit Tx, x≥1 kann entlang der Transportstrecken TSm bewegt werden. Die einzelnen Transportstrecken TSm sind durch Übergabestellen Uj, j>1 (auch hier sind nicht alle Übergabestellen Uj bezeichnet), an denen sich die Transportstrecken TSm teilweise überlappen, miteinander verbunden. Eine Übergabestelle Uj kann als Weiche ausgeführt sein, wie beispielsweise die Übergabestellen U2, U3, kann aber auch als einfacher Wechsel von einer Transportstrecke TSm auf eine andere Transportstrecke TSm ausgeführt sein, wie beispielsweise die Übergabestellen U1, Uj. Bei einer Weiche gibt es eine Aufteilung auf verschiedene Transportstrecken TS oder eine Zusammenführung von verschiedenen Transportstrecken TS. Entlang der Transportstrecken TS können auch verschiedene Arbeitsstationen AS angeordnet sein, an denen eine Transporteinheit Tx durchbewegt oder auch angehalten werden kann. In den Arbeitsstationen AS können an Bauteilen, die mit einer Transporteinheit Tx bewegt werden, irgendwelche Manipulationen durchgeführt werden. Eine Arbeitsstation AS kann dabei auch zum Einschleusen oder Ausschleusen von Transporteinheiten Tx in eine Transportstrecke TS ausgeführt sein.

Um eine Transportstrecke TS eines Langstatorlinearmotors 1 einfach aber trotzdem flexibel aufbauen zu können ist ein Baukastensystem bestehend aus verschiedenen, vordefinierten Transportstreckenbaugruppen TMn, wobei zumindest zwei verschiedene Transportstreckenbaugruppen TMn zur Auswahl stehen, vorgesehen. Zum Aufbau des Baukastensystems ist eine Rasterlänge a definiert, aus dem sich ein gedachtes Raster a x a ergibt.

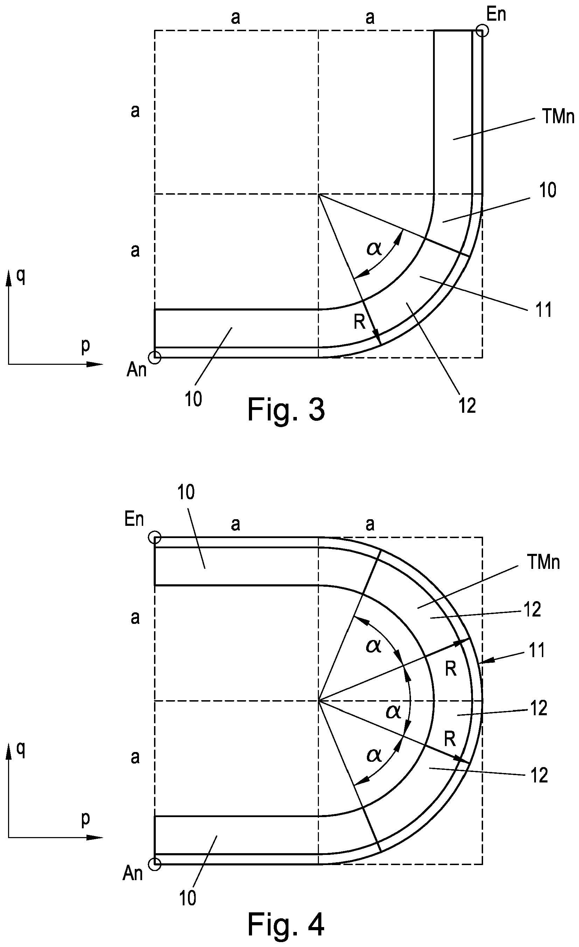

Jede Transportstreckenbaugruppe TMn hat einen Anfangspunkt An und einen Endpunkt En, wie in Fig.3 und 4 am Beispiel eines 90°-Bogens und einer 180°-Bogens dargestellt ist. Die Transportstreckenbaugruppen TMn werden derart zur Transportstrecke TSm verbunden, dass jeweils ein Anfangspunkt An und ein Endpunkt En benachbarter Transportstreckenbaugruppen TMn zusammenfallen. Die Anfangspunkte An und Endpunkte En sind auf einer Transportstreckenbaugruppe TMn natürlich austauschbar. Weiters ist anzumerken, dass die Doppellinie an der Transportstreckenbaugruppe TMn in den Figuren nur symbolisch ist und die Seite anzeigt, entlang der eine Transporteinheit Tx geführt bzw. bewegt wird - es gibt somit eine innenliegende und außenliegende Führung für eine Transporteinheit Tx. Die Anfangspunkte An und Endpunkte En sind hierbei an der Seite, entlang der eine Transporteinheit Tx geführt bzw. bewegt wird.

Jeder Anfangspunkt An und Endpunkt En einer Transportstreckenbaugruppe TMn des Baukastensystems liegt auf einem Rastereckpunkt (p·a) x (q·a) des (a x a)-Rasters, wobei p, q ganze Zahlen sind (p, $q \in \mathbb{Z}$). Dabei ist ein Rastereckpunkt als Ursprung festzulegen, von dem weg das Raster aufgebaut wird. Dabei wird der Ursprung vorzugsweise der Einfachheit halber (aber nicht zwingendermaßen) so gewählt, dass p, q für verschiedene Rastereckpunkte (p·a) x (q·a) nicht das Vorzeichen wechseln müssen. Das Raster in Fig.3 hat dann beispielsweise die neun Rastereckpunkte (0·a) x (0·a) (was dem Ursprung entspricht), (1·a) x (0·a), (2·a) x (0·a), (0·a) x (1·a), (1·a) x (1·a), ..., (2·a) x (2·a). Im Falle der Fig.3 liegt der Anfangspunkte An der Transportstreckenbaugruppe TMn in Form eines 90°-Bogens beispielsweise auf dem Rastereckpunkt mit p=q=0 und der Endpunkt En auf dem Rastereckpunkt mit p=q=2. Wäre der Ursprung beispielsweise am Endpunkt En, dann läge der Anfangspunkt An der Transportstreckenbaugruppe TMn nach Fig.3 beispielsweise auf dem Rastereckpunkt mit p=q=-2. Allgemein gilt für den Anfangspunkt An oder Endpunkt En eines 90°-Bogens p,q≠0. Im Falle der Fig.4 liegt der Anfangspunkt An der Transportstreckenbaugruppe TMn beispielsweise auf dem Rastereckpunkt mit p=q=0 und der Endpunkt En auf dem Rastereckpunkt mit p=0, q=2. Der 180°-Bogen der Fig.4 könnte beispielsweise aber natürlich auch so definiert sein, dass für den Endpunkt En p=1, q=2 gewählt wird. Allgemein gilt für den Anfangspunkt An oder Endpunkt En eines 180°-Bogens $p \in \mathbb{Z}$, q≠0.

Eine Transportstreckenbaugruppe TMn kann auch aus zwei Kurveneingangsmodulen 10, auf denen der Anfangspunkt An oder der Endpunkt En vorgesehen ist, und zumindest einem Verbindungsmodul 11, das die beiden Kurveneingangsmodule 10 verbindet, ausgebildet sein, wie in Fig.3 und 4 dargestellt. Das hat den Vorteil, dass man aus den Kurveneingangsmodulen 10 mit verschiedenen Verbindungsmodulen 11 auch verschiedene Transportstreckenbaugruppen TMn erzeugen kann. Dazu kann das Verbindungsmodul 11 selbst auch noch unterteilt sein, beispielsweise in Form mehrerer Kreissegmentmodule 12, wie in Fig.4 dargestellt.

Ein Kreissegmentmodul 12 in Form eines Kreisbogens spannt beispielsweise einen Winkel $\alpha=45°$ auf. Wenn nun das Kurveneingangsmodul 10 eine Winkeländerung der Transportstrecke (in Bewegungsrichtung gesehen) von 22.5° realisiert, dann kann mit solchen Kurveneingangsmodulen 10 und Kreissegmentmodulen 12 mit Bogenwinkel $\alpha=45°$ sowohl ein 90°-Bogen (Fig.3), als auch ein 180°-Bogen (Fig.4) realisiert werden. Ein Verbindungsmodul 11 bestehend aus drei Kreissegmentmodulen 12, das mit zwei Kurveneingangsmodulen 10 verbunden ist, ergibt dann einen 180°-Bogen. Ein Verbindungsmodul 11 bestehend aus einem Kreissegmentmodul 12 und zwei damit verbundenen Kurveneingangsmodulen 10 ergibt dann einen 90°-Bogen. Selbstverständlich sind auch andere Aufteilungen denkbar. Beispielsweise könnte ein 90°-winkeliges oder 135°-winkeliges Kreissegmentmodul 12 vorgesehen sein.

Hierbei ist es besonders vorteilhaft, wenn ein Kurveneingangsmodul 10 eine Winkeländerung realisiert, um eine Kurve von einem Krümmungsradius von unendlich (Krümmung Null) an einem Ende des Kurveneingangsmoduls 10 auf einen Krümmungsradius R (Krümmung 1/R) am anderen Ende des Kurveneingangsmoduls 10 zu verwirklichen. Dabei kann vorgesehen sein, dass die Krümmung möglichst stetig von Null auf 1/R erhöht wird, beispielsweise indem eine Kurve in Form eines Splines (z.B. ein Polynom 5.Ordnung) realisiert wird. Würde sich die Krümmung sprunghaft ändern, so würde das für eine Transporteinheit Tx, die entlang einer Transportstreckenbaugruppe TMn mit einem Kurveneingangsmodul 10 bewegt wird, einen Sprung in der Zentrifugalbeschleunigung bedeuten. Das würde die Mechanik der Transporteinheit Tx und/oder der Führung der Transportstrecke TSm belasten und den Verschleiß erhöhen. Unter diesem Gesichtspunkt ist es auch vorteilhaft, wenn die Krümmung an einem Ende des Kurveneingangsmoduls 10 und die Krümmung an einem Ende des Verbindungsmoduls 11, bzw. eines Kreissegmentmoduls 12, gleich sind, da es auch dann zu keinem Sprung in der Krümmung der Transportstreckenbaugruppe TMn kommt, wenn das Kurveneingangsmodul 10 und das Verbindungsmoduls 11, bzw. das Kreissegmentmoduls 12, kombiniert werden. Nachdem das Kreissegmentmodul 12 vorzugsweise einen Kreisbogen mit Radius R realisiert, ist die Krümmung am Enden des Kurveneingangsmoduls 10 vorzugsweise ebenfalls 1/R.

Sinnvollerweise ist auch eine gerade Transportstreckenbaugruppe TMn definiert, mit p≠0, q=0. Die Länge der geraden Transportstreckenbaugruppe TMn entspricht damit der Anzahl der Rasterlängen a zwischen Anfangspunkt An und Endpunkt En.

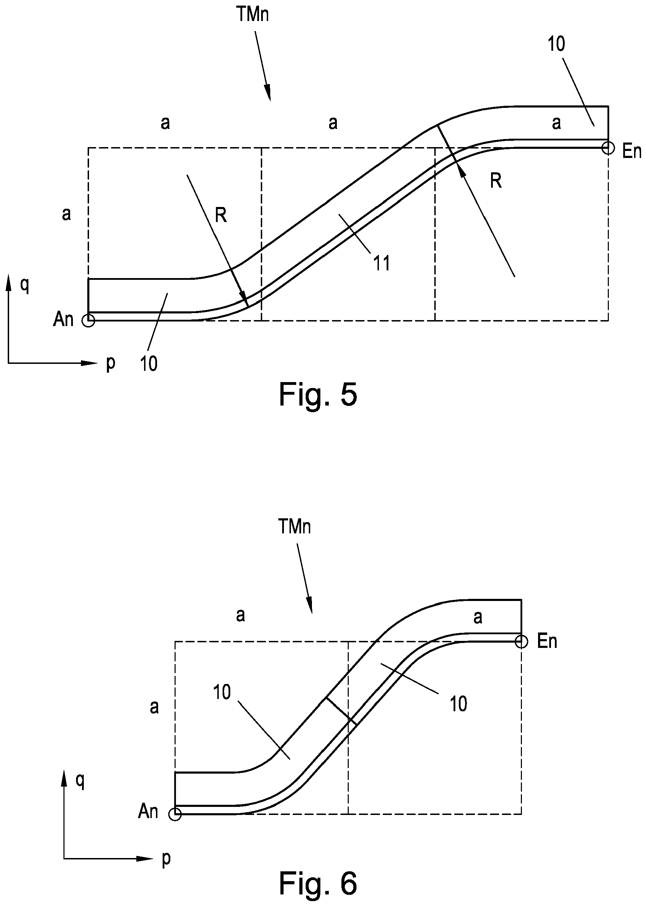

Ebenso kann eine S-förmige Transportstreckenbaugruppe TMn im Baukastensystem definiert sein, wie in Fig.5 dargestellt. Der Anfangspunkt An der S-förmigen Transportstreckenbaugruppe TMn liegt beispielsweise im Ursprung mit p=q=0 und der Endpunkt En auf einem Rastereckpunkt mit p, q≠0, beispielsweise p=3, q=1 wie in Fig.5. Die S-förmige Transportstreckenbaugruppe TMn hat an den beiden Enden (Anfangspunkt An und Endpunkt En) vorzugsweise eine Krümmung Null, was einen einfachen Anschluss an eine weitere Transportstreckenbaugruppe TMn des Baukastensystems ermöglicht. Zwischen den beiden Enden wechselt die Krümmung zumindest einmal von positiv auf negativ, um die S-Form zu realisieren. Vorzugsweise wechselt die Krümmung wieder stetig entlang der Transportstreckenbaugruppe TMn, um einen Krümmungssprung zu vermeiden. Dabei können wiederum zwei Kurveneingangsmodule 10 und ein Verbindungsmodul 11 (auch in einer weiteren Unterteilung) zur Transportstreckenbaugruppe TMn verbunden werden, wie in Fig.5 dargestellt. Dabei ist es besonders vorteilhaft, wenn dasselbe Kurveneingangsmodul 10 wie für die 90°- oder 180°-Baugruppe verwendet wird. In diesem Fall ist nur ein eigenes Verbindungsmodul 11 zur Realisierung der S-Kurve festzulegen. Das Verbindungsmodul 11 hat dabei vorzugsweise zwei Enden mit einer Krümmung, die der Krümmung des benachbarten Kurveneingangsmoduls 10 entspricht, z.B. 1/R wie in Fig.5. Die durch die S-förmige Transportstreckenbaugruppe TMn gebildete Kurve kann wiederum mittels eines geeigneten Splines modelliert werden. Durch die S-förmige Transportstreckenbaugruppe TMn kann die Führung natürlich auch von außenliegend auf innenliegend wechseln.

Mit Fig.6 ist eine alternative Ausgestaltung einer S-förmigen Transportstreckenbaugruppe TMn dargestellt, die aus zwei miteinander verbundenen Kurveneingangsmodulen 10 gebildet ist. Die beiden Enden dieser Kurveneingangsmodule 10 haben vorzugsweise jeweils eine Krümmung Null, was wiederum einen einfachen Anschluss ermöglicht, und die Krümmung dazwischen ändert sich vorzugsweise stetig. Der Endpunkt En dieser S-förmigen Transportstreckenbaugruppe TMn liegt beispielsweise am Rastereckpunkt mit p=2, q=1.

Jede Transportstreckenbaugruppe TMn könnte natürlich noch um ±90° gedreht werden, was aber an den obigen allgemeinen Definitionen nichts ändert.

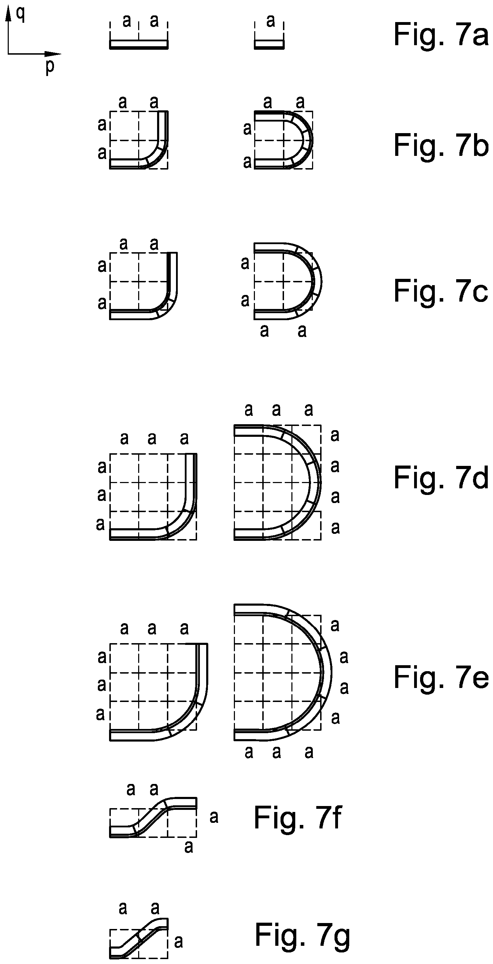

Ein mögliches Baukastensystem mit einer Auswahl von Transportstreckenbaugruppen TMn ist in Fig.7 dargestellt. Als Ursprung wird hierbei jeweils der Rastereckpunkt links unten angesehen. Auf die Markierung des Anfangspunktes An und des Endpunktes En wird auf Gründern der Übersichtlichkeit verzichtet. Fig.7a zeigt zwei gerade Transportstreckenbaugruppen TMn mit Länge a und 2a (q=0, p=1 bzw. 2). Fig.7b zeigt links einen 90°-Bogen mit Anfangspunkt An (oder Endpunkt En) im Ursprung bei p=q=0 und Endpunkt En (oder Anfangspunkt An) auf dem Rastereckpunkt p=q=2 und einer außenliegenden Führung. Fig.7b zeigt rechts einen 180°-Bogen mit Anfangspunkt An (oder Endpunkt En) im Ursprung bei p=q=0 und Endpunkt En (oder Anfangspunkt An) auf dem Rastereckpunkt p=0, q=2 und einer außenliegenden Führung. Fig.7c zeigt einen 90°-Bogen und einen 180°-Bogen wie in Fig.7b mit einer innenliegenden Führung. Fig.7d zeigt links einen 90°-Bogen mit Anfangspunkt An (oder Endpunkt En) im Ursprung bei p=q=0 und Endpunkt En (oder Anfangspunkt An) auf dem Rastereckpunkt p=q=3 und einer außenliegenden Führung. Fig.7d zeigt rechts einen 180°-Bogen mit Anfangspunkt An (oder Endpunkt En) im Ursprung bei p=q=0 und Endpunkt En (oder Anfangspunkt An) auf dem Rastereckpunkt p=0, q=4 und einer außenliegenden Führung.Fig.7e zeigt dasselbe wie Fig.7d für eine innenliegende Führung. Die Fig.7f und Fig.7g zeigen S-förmige Transportstreckenbaugruppen TMn mit Anfangspunkt An (oder Endpunkt En) im Ursprung bei p=q=0 und Endpunkt En (oder Anfangspunkt An) auf dem Rastereckpunkt mit p=3, q=1 in Fig.7f und p=2, q=1 in Fig.7g. Mit den Transportstreckenbaugruppen TMn im Baukastensystem kann beispielsweise ein Langstatorlinearmotor 1 gemäß Fig.1 oder 2 aufgebaut werden.

Zur Dimensionierung der Transportstreckenbaugruppe TMn bzw. zur Festlegung der Rasterlänge a können folgende Überlegungen angestellt werden. Eine Transportstreckenbaugruppe TMn trägt eine Anzahl von Antriebsspulen 7. Die Antriebsspulen 7 haben eine bekannte Dimension (Länge). Somit sollte die Baugruppenlänge (Länge bei einer Gerade, Bogenlänge bei einem Kreisbogen, usw.) einer Transportstreckenbaugruppe TMn möglichst ein ganzzahliges Vielfaches der Dimension der Antriebsspulen 7 sein, um zu große Abschnitte entlang der Transportstreckenbaugruppe TMn ohne Antriebsspulen 7 zu vermeiden, da an solchen Abschnitten kein Magnetfeld aufgebaut werden kann und keine Kraft auf die Transporteinheit Tx ausgeübt werden kann. Zudem sollte ein Krümmungsradius R nicht zu klein gewählt werden, was zwar den Aufbau kompakter machen würde aber auch die Fliehkräfte (und damit die mechanische Belastung) erhöht, wenn die Transportstreckenbaugruppe TMn mit einer konstanten Geschwindigkeit durchfahren wird. In einer konkreten Umsetzung wurde beispielsweise die Rasterlänge a=315mm mit einem Krümmungsradius von R=307,5775mm festgelegt. Auf dieser Rasterlänge a haben 21 Antriebsspulen 7 mit Länge 15mm Platz. Für ein Kreisbogensegment 12 mit einem Öffnungswinkel $\alpha$=45° können 8 Antriebsspulen 7 angeordnet werden.

**Patentansprüche**

1. Baukastensystem für das Konfigurieren einer Transportstrecke (TSm) eines Langstatorlinearmotors (1) bestehend aus einer Vielzahl von Transportstreckenbaugruppen (TMn), wobei jede Transportstreckenbaugruppe (TMn) einen Anfangspunkt (An) und einen Endpunkt (En) aufweist, der jeweils auf einem Rastereckpunkt (p·a) x (q·a) eines (a x a)-Rasters mit vorgegebener Rasterlänge a liegt, wobei p, q ganze Zahlen sind, **dadurch gekennzeichnet, dass** im Baukastensystem zumindest eine Transportstreckenbaugruppe (TMn) vorgesehen ist, die aus zwei Kurveneingangsmodulen (10), auf denen der Anfangspunkt (An) oder der Endpunkt (En) vorgesehen ist, und zumindest einem Verbindungsmodul (11), das die beiden Kurveneingangsmodule (10) verbindet, zusammengesetzt ist, wobei der Krümmungsradius (R) jeweils eines Endes der Kurveneingangsmodule (10) unendlich ist und das jeweils andere Ende des Kurveneingangsmoduls (10) einen vorgegebenen Krümmungsradius (R) größer Null aufweist und das Verbindungsmodul (11) an beiden Enden denselben vorgegebenen Krümmungsradius (R) aufweist.

2. Baukastensystem nach Anspruch 1, **dadurch gekennzeichnet, dass** im Baukastensystem zusätzlich eine gerade Transportstreckenbaugruppe (TMn) mit Anfangspunkt (An) im Rastereckpunkt p, q=0 als Ursprung und Endpunkt (En) im Rastereckpunkt p ≠ 0, q=0, oder umgekehrt, vorgesehen ist.

3. Baukastensystem nach Anspruch 1, **dadurch gekennzeichnet, dass** im Baukastensystem zusätzlich eine 90° Transportstreckenbaugruppe (TMn) mit Anfangspunkt (An) im Rastereckpunkt p, q=0 als Ursprung und Endpunkt (En) im Rastereckpunkt p, q ≠ 0, oder umgekehrt, und vorzugsweise p=q, zur Auswahl vorgesehen ist.

4. Baukastensystem nach Anspruch 1, **dadurch gekennzeichnet, dass** im Baukastensystem zusätzlich eine 180° Transportstreckenbaugruppe (TMn) mit Anfangspunkt (An) im Rastereckpunkt p, q=0 als Ursprung und Endpunkt (En) im Rastereckpunkt p∈ ℤ, q ≠ 0, oder umgekehrt, zur Auswahl vorgesehen ist.

5. Baukastensystem nach Anspruch 1, **dadurch gekennzeichnet, dass** im Baukastensystem zusätzlich eine S-förmige Transportstreckenbaugruppe (TMn) mit Anfangspunkt (An) im Rastereckpunkt p, q=0 als Ursprung und Endpunkt (En) im Rastereckpunkt p, q ≠ 0, oder umgekehrt, zur Auswahl vorgesehen ist.

6. Baukastensystem nach Anspruch1, **dadurch gekennzeichnet, dass** das Verbindungsmodul (11) aus einer Mehrzahl von Kreissegmentmodulen (12) zusammengesetzt ist, wobei jedes Kreissegmentmodul (12) an beiden Enden denselben Krümmungsradius (R) aufweist.

7. Baukastensystem nach Anspruch1, **dadurch gekennzeichnet, dass** das Verbindungsmodul (11) an beiden Enden denselben vorgegebenen Krümmungsradius (R) mit Krümmungen in unterschiedlichen Richtungen aufweist.

8. Baukastensystem nach Anspruch 5, **dadurch gekennzeichnet, dass** eine S-Kurven Transportstreckenbaugruppe (TMn) aus zwei miteinander verbundenen Kurveneingangsmodulen (10) zusammengesetzt ist.

9. Baukastensystem nach Anspruch 8, **dadurch gekennzeichnet, dass** der Krümmungsradius (R) jeweils eines Endes der Kurveneingangsmodule (10) unendlich ist und das jeweils andere Ende der Kurveneingangsmodule (10) einen gleichen vorgegebenen Krümmungsradius (R) größer Null mit Krümmungen in unterschiedlichen Richtungen aufweist.

10. Transportstrecke eines Langstatorlinearmotors (1) bestehend aus einer Vielzahl von Transportstreckenbaugruppen (TMn), wobei die Transportstreckenbaugruppen (TMn) durch Aneinanderreihen zur Transportstrecke (TSm) verbunden sind und die Transportstreckenbaugruppen (TMn) aus dem Baukastensystem nach einem der Ansprüche 1 bis 9 entnommen sind, wobei zumindest eine Transportstreckenbaugruppe (TSm) nach Anspruch 1 vorgesehen ist..

11. Langstatorlinearmotor mit zumindest einer Transportstrecke (TSm) bestehend aus einer Vielzahl von Transportstreckenbaugruppen (TMn), wobei die Transportstreckenbaugruppen (TMn) durch Aneinanderreihen zur Transportstrecke (TSm) verbunden sind und die Transportstreckenbaugruppen (TMn) aus dem Baukastensystem nach einem der Ansprüche 1 bis 9 entnommen sind, wobei zumindest eine Transportstreckenbaugruppe (TSm) nach Anspruch 1 vorgesehen ist..

**Claims**

1. A modular system for the configuration of a transport line (TSm) of a long stator linear motor (1), made of a plurality of transport line components (TMn), wherein each transport line component (TMn) has a starting point (An) and an end point (En), each lying on a raster corner point (p·a) x (q·a) of an (a x a) raster with a prespecified raster length a, wherein p, q are whole numbers, **characterized in that** in the modular system at least a transport line component (TMn) is included, which is composed of two curve entry modules (10) on which is included the starting point (An) or the end point (En), and at least one connection module (11) which connects the two curve entry modules (10), wherein the curvature radius (R) of one end of each of the curve entry modules (10) is infinite, and the other respective end of the curve entry module (10) has a prespecified curvature radius (R) greater than zero and the connection module (11) has the same prespecified curvature radius (R) on both ends.

2. The modular system according to claim 1, **characterized in that** a straight transport line component (TMn) with starting point (An) on raster corner point p, q = 0 as the origin and end point (En) on raster corner point p ≠ 0, q = 0 or vice versa is additionally included in the modular system.

3. The modular system according to claim 1, **characterized in that** a 90° transport line component (TMn) with starting point (An) on raster corner point p, q = 0 as the origin and end point (En) on raster corner point p, q ≠ 0, or vice versa and preferably p = q is additionally included for selection in the modular system.

4. The modular system according to claim 1, **characterized in that** a 180° transport line component (TMn) with starting point (An) on raster corner point p, q = 0 as the origin and end point (En) on raster corner point $p \in \mathbb{Z}$, q ≠ 0 or vice versa is additionally included for selection in the modular system.

5. The modular system according to claim 1, **charac-**

**terized in that** an S-shaped transport line component (TMn) with starting point (An) on raster corner point p, q = 0 as the origin and end point (En) on raster corner point p, q ≠ 0 or vice versa is additionally included for selection in the modular system.

6. The modular system according to claim 1, **characterized in that** the connection module (11) is composed of a plurality of circular-segment-modules (12), wherein each circular-segment-module (12) has the same curvature radius (R) on both ends.

7. The modular system according to claim 1, **characterized in that** the connection module (11) has the same prespecified curvature radius (R) on both ends, with curvatures in different directions.

8. The modular system according to claim 5, **characterized in that** an S-curve transport line component (TMn) is composed of two curve entry modules (10) connected to each other.

9. The modular system according to claim 8, **characterized in that** the curvature radius (R) of one end of each curve entry module (10) is infinite, and the other respective end of the curve entry module (10) has an identical prespecified curvature radius (R) greater than zero, with curvatures in different directions.

10. A transport line of a long stator linear motor (1), made of a plurality of transport line components (TMn), wherein the transport line components (TMn) are connected in series to form the transport line (TSm), and the transport line components (TMn) are taken from the modular system according to one of the claims 1 to 9, wherein at least one transport line component (TSm) according to claim 1 is provided.

11. A long stator linear motor having at least one transport line (TSs) made of a plurality of transport line components (TMn), wherein the transport line components (TMn) are connected in series to form the transport line (TSm), and the transport line components (TMn) are taken from the modular system according to one of the claims 1 to 9, wherein at least one transport line component (TSm) according to claim 1 is provided.

**Revendications**

1. Système modulaire destiné à configurer un itinéraire de transport (TSm) d'un moteur linéaire à stator long (1), constitué d'une pluralité de modules d'itinéraire de transport (TMn), chaque module d'itinéraire de transport (TMn) présentant un point de départ (An) et un point final (En), se trouvant chacun sur un point de coin (p·a) x (q·a) d'une (a x a) grille ayant une longueur prédéfinie a, p, q, étant des nombres entiers, **caractérisé en ce que,** dans le système modulaire, au moins un module d'itinéraire de transport (TMn) est prévu, lequel module d'itinéraire de transport se compose de deux modules d'entrée de courbe (10) sur lesquels sont prévus le point de départ (An) ou le point final (En), et d'au moins un module de liaison (11) reliant les deux modules d'entrée de courbe (10), le rayon de courbure (R) d'une extrémité respective des modules d'entrée de courbe (10) étant infini et l'autre extrémité respective du module d'entrée de courbe (10) présentant un rayon de courbure (R) prédéfini supérieur à zéro, et le module de liaison (11) présentant le même rayon de courbure (R) prédéfini aux deux extrémités.

2. Système modulaire selon la revendication 1, **caractérisé en ce que,** dans le système modulaire, un module d'itinéraire de transport (TMn) rectiligne supplémentaire, comportant un point de départ (An) dans le point de coin de grille p, q=0 comme point d'origine et un point final (En) dans le point de coin de grille p ≠ 0, q=0, ou inversement, est prévu.

3. Système modulaire selon la revendication 1, **caractérisé en ce que,** dans le système modulaire, un module d'itinéraire de transport (TMn) supplémentaire à 90 ° comportant un point de départ (An) dans le point de coin de grille p, q=0 comme point d'origine et un point final (En) dans le point de coin de grille p, q ≠ 0, ou inversement, et de préférence p=q, est prévu pour la sélection.

4. Système modulaire selon la revendication 1, **caractérisé en ce que,** dans le système modulaire, un module d'itinéraire de transport (TMn) supplémentaire à 180 ° comportant un point de départ (An) dans le point de coin de grille p, q=0 comme point d'origine et un point final (En) dans le point de coin de grille p ε $\mathbb{Z}$, q ≠ 0, ou inversement, est prévu pour la sélection.

5. Système modulaire selon la revendication 1, **caractérisé en ce que,** dans le système modulaire, un module d'itinéraire de transport (TMn) supplémentaire en S comportant un point de départ (An) dans le point de coin de grille p, q=0 comme point d'origine et un point final (En) dans le point de coin de grille p, q ≠ 0, ou inversement, est prévu pour la sélection.

6. Système modulaire selon la revendication 1, **caractérisé en ce que** le module de liaison (11) est composé d'une pluralité de modules à segments circulaires (12), chaque module à segments circulaires (12) présentant le même rayon de courbure (R) aux deux extrémités.

7. Système modulaire selon la revendication 1, **caractérisé en ce que** le module de liaison (11) présente, aux deux extrémités, le même rayon de courbure (R) prédéfini comportant des courbures dans des directions différentes.

8. Système modulaire selon la revendication 5, **caractérisé en ce qu'**un module d'itinéraire de transport (TMn) à courbe en S est composé de deux modules d'entrée de courbe (10) reliés.

9. Système modulaire selon la revendication 8, **caractérisé en ce que** le rayon de courbure (R) d'une extrémité respective des modules d'entrée de courbe (10) est infini et l'autre extrémité respective des modules d'entrée de courbe (10) présente un même rayon de courbure (R) prédéfini supérieur à zéro comportant des courbures dans différentes directions.

10. Itinéraire de transport d'un moteur linéaire à stator long (1) constitué d'une pluralité de modules d'itinéraire de transport (TMn), les modules d'itinéraire de transport (TMn) étant reliés à l'itinéraire de transport (TSm) par séries successives et les modules d'itinéraire de transport (TMn) étant extraits du système modulaire selon l'une des revendications 1 à 9, au moins un module d'itinéraire de transport (TSm) selon la revendication 1 étant prévu.

11. Moteur linéaire à stator long comportant au moins un itinéraire de transport (TSm) constitué d'une pluralité de modules d'itinéraire de transport (TMn), les modules d'itinéraire de transport (TMn) étant reliés à l'itinéraire de transport (TSm) par séries successives et les modules d'itinéraire de transport (TMn) étant extraits du système modulaire selon l'une des revendications 1 à 9, au moins un module d'itinéraire de transport (TSm) selon la revendication 1 étant prévu.

Fig. 1

Fig. 2

Fig. 3

Fig. 4

TMn

10

a

a

a

q

a

R

11

R

An

p

10

En

## Fig. 5

TMn

a

a

En

a

10

10

q

An

p

## Fig. 6

Fig. 7a

Fig. 7b

Fig. 7c

Fig. 7d

Fig. 7e

Fig. 7f

Fig. 7g

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015042409 A1
- US 20110125307 A1
- US 20030230941 A1
- WO 0138124 A1
- DE 102010027925 A1
- US 20100236445 A1